# EUROPEAN PATENT APPLICATION

(11) **EP 2 226 711 A1**
(43) Date of publication of application: **08.09.2010**
(21) Application number: 08867655.6
(22) Date of filing: 14.10.2008
(51) Int. Cl.: G06F 3/048

(54) **INPUT DEVICE, INPUT OPERATION METHOD, AND INPUT CONTROL PROGRAM FOR ELECTRONIC DEVICE**

(30) Priority: 28.12.2007 JP 2007340242
(71) Applicant: Panasonic Corporation, Kadoma-shi Osaka 571-8501 (JP)
(72) Inventor: NAKAO, Masatoshi, Osaka-shi, Osaka 540-6207 (JP)
(74) Representative: Grünecker, Kinkeldey, Stockmair & Schwanhäusser Anwaltssozietät
(86) International application number: PCT/JP2008/002896
(87) International publication number: WO 2009/084140

(57) **Abstract**

The display area of an operation button, etc., to be operated and a sensitive area to operation are appropriately set in various situations and if the operation target cannot clearly be recognized, operability is improved.

When an operation button is placed in a non-display state or is placed in a display state in a mode in which clearness of the contours of the operation button is low by a screen display control section 500, an input signal analysis section 200 determines whether or not the input position of a touch panel 10 detected by an input signal control section 300 is in a sensitive area A1 larger than the display area of the operation button. If it is determined that the input position is in the sensitive area A1, processing for the input operation is executed and a command is sent to a setting control section 400 and the screen display control section 500 and the operation button or the contours thereof are placed in the display state by the screen display control section 500. The sensitive area is switched to a sensitive area A2 almost equal to the display area of the operation button and smaller than the sensitive area A1 after a lapse of a predetermined time since the display state was set.

## Description

### <Technical Field>

This invention relates to an input device of an electronic device that can be used for input operation in an electronic device such as a mobile telephone terminal, a portable information terminal (PDA), a portable music player, or a portable gaming machine, for example.

### <Background Art>

In various electronic devices, recently a touch panel has often been used for an operation section for input operation of the user to improve operability of the user and decrease the number of mechanical operation buttons. When the user touches or presses any point on a plane with a finger, etc., the touch panel detects the input operation, detects the coordinates of the input position, and detects a change in the coordinates of the input position. Generally, the touch panel is placed in a state in which it is put on a display screen of a liquid crystal display, etc., and the positions of various operation buttons (or icons) displayed on the display screen in response to the situation and the coordinates on the touch panel are associated with each other. Accordingly, the need for a large number of mechanical operation buttons is eliminated and information representing the correspondence between the position of each displayed operation button and the coordinates on the touch panel and display on the display screen are simply changed, whereby it is made possible to change the positions, the number, the shapes, etc., of the operation buttons without changing hardware.

In this kind of input device, generally control is performed so as to execute the command previously assigned to the corresponding operation button or icon if the input operation (for example, pressing the touch panel) is detected in a specific operation range matching the range of the display area of each operation button and icon displayed on the display screen.

However, for an electronic device with a comparatively small display screen such as a mobile telephone terminal, for example, the operation button and the icon displayed on the screen must also be made small. Thus, particularly when the user presses a touch panel with a finger, thereby performing input operation, the range of the area where the operation button to be operated by the user is displayed and the position actually pressed by the user with a finger, etc., shift easily and a situation in which the user repeats pressing the same operation button until the user presses the correct position and starts desired operation also occurs.

As related arts to solve such problems and improve the operability of the user, for example, arts disclosed in Patent Document 1, Patent Document 2,
Patent Document 3, and Patent Document 4 are known.

Patent Document 1 discloses an art wherein when bringing a finger close to a touch panel is recognized according to a signal from a camera, the icon in the proximity of the target position is enlarged on display. Accordingly, if the screen is small, when the touch panel is operated, each icon can be recognized in an enlarged state and thus it becomes easy to grasp the position.

Patent Document 2 discloses an art wherein when the position of a cursor displayed on a screen is brought close to the objective button on the screen, the button is enlarged on display. Accordingly, if the screen is small, when the button on the screen is operated, the button is enlarged on display, so that it becomes easy to register the button and the cursor.

Patent Document 3 discloses an art wherein when a position outside the area of a displayed icon, etc., is operated (clicked) with a mouse cursor, display of the corresponding icon, etc., is enlarged and the area responsive to the input operation is also enlarged. Accordingly, if the screen is small, the icon, etc., enlarged on the screen can be operated, so that it becomes easy to register the icon and the mouse cursor.

Patent Document 4 discloses an art wherein priority is assigned to a large number of icons displayed on a screen of a touch panel and the size of the area of each icon is controlled in response to the priority and the frequency of actually operating each icon is detected and the priority of each icon is automatically changed in response to the result. Accordingly, the icon with the high priority and the icon whose operation frequency is high are displayed largely, so that it becomes easy to register each icon and a finger.
Patent Document 1: Japanese Patent Laid-Open No. 2006-236143
Patent Document 2: Japanese Patent Laid-Open No. 16353/1996
Patent Document 3: Japanese Patent Laid-Open No. 251341/1997
Patent Document 4: Japanese Patent Laid-Open No. 54657/1997

### <Disclosure of the Invention>

### <Problems to be solved by the Invention>

By the way, even a device for displaying visible information (display elements forming a graphical user interface: Also called Widget) such as an operation button and an icon on a screen for touch panel operation or operation using a mouse cursor, etc., may temporarily erase display.

For example, to display content of a moving image like a TV program or a still image like a photo on a comparatively small screen, the possibility that when content is viewed, display of each operation button and icon may obstruct the view for the user is high. Thus, even an operation button in an operable state on the screen is switched to a non-display state and the system waits for input operation from the user and only if actual operation is detected, the operation button is switched from the non-display state to a display state.

Therefore, the user can also operate an operation button and an icon in the non-display state and may actually operate them. That is, if the user is familiar with the electronic device, the user retains the position of each operation button in the display state in memory and thus operates the proximity of the hidden area where the desired operation button can exist by pressing the touch panel or using the mouse cursor, etc.

However, to operate an operation button or an icon in the non-display state, the position cannot be recognized with eyes and the user must rely only on his or her memory and intuition and registration is difficult to perform and operability is not good. To operate an operation button or an icon in the display state, registration may be difficult to perform. For example, if the contrast between the display of an operation button displayed on the screen and the background (for example, an image, etc.,) (luminance difference) or color difference is small, it becomes difficult to distinguish the boundary between the operation button and the background and thus the display range of the operation button to be operated is hard to grasp. For example, if the shape of an operation button is complicated or the contours of an operation button are not linear or a curve (for example, are a waveform or jagged), it also becomes difficult to understand what area the range of the operation button to be operated extends to.

In view of the circumstances described above, it is an object of the invention to provide an input device, an input operation processing method, and an input control program of an electronic device that can appropriately set the display area of an element of an operation button, an icon, etc., to be operated and a sensitive area to operation in various situations and if the operation target cannot clearly be recognized, can improve operability.

### <Means for Solving the Problems>

An input device of an electronic device according to the invention is an input device of an electronic device including a display section that can display visible information concerning input operation; an input operation section for giving a command to a display screen of the display section and generating an input signal; and an input control section for giving a processing command based on an input signal of the input operation section, wherein the input control section has an input position detection section for detecting an input position corresponding to the display screen based on the input signal; a screen display control section for controlling the display state of an object to be operated, displayed on the display screen; and an input signal analysis section, if the object to be operated is in a non-display state or is in a display state in a mode in which the clearness of the contours of the object is low by the screen display control section, the input signal analysis section for determining whether or not the input position detected by the input position detection section is in a first sensitive area containing a display area of the object as a sensitive area to input operation, and wherein if the input signal analysis section determines that the input position is in the first sensitive area, processing for the input operation is executed and the screen display control section places the objects in a display state or displays the contours of the object.

An input device of an electronic device according to the invention is an input device of an electronic device including a display section that can display visible information concerning input operation; a touch panel having an input function according to contact operation with an input face corresponding to a display screen of the display section; and an input control section for giving a processing command for input operation based on an input signal of the touch panel, wherein the input control section has an input position detection section for detecting an input position on the input face; a screen display control section for controlling the display state of an object to be operated, displayed on the display screen; and an input signal analysis section, if the object to be operated is in a non-display state or is in a display state in a mode in which the clearness of the contours of the object is low by the screen display control section, the input signal analysis section for determining whether or not the input position detected by the input position detection section is in a first sensitive area containing a display area of the object as a sensitive area to input operation, and wherein if the input signal analysis section determines that the input position is in the first sensitive area, processing for the input operation is executed and the screen display control section places the objects in a display state or displays the contours of the object.

Accordingly, if the object to be operated, displayed in the display section is in the non-display state or is in the display state in a mode in which the clearness of the contours of the object is low, the sensitive area to input operation is set to the first sensitive area containing the display area of the object and when the input position is in the first sensitive area, processing for the input operation is performed, the display area of an element of an operation button, an icon, etc., to be operated and a sensitive area to operation can be appropriately set in various situations. If the operation target cannot clearly be recognized, operability can be improved. If operation input is detected, the object is placed in the display state or the contours of the object are displayed, the user can check reaction to the operation and can clearly recognize the operation target.

The invention contains the input device described above, wherein the input signal analysis section switches the sensitive area to input operation to a second sensitive area within the first sensitive area after a lapse of a predetermined time since the screen display control section displayed the object or the contours of the object, and determines whether or not the input position is within the second sensitive area.
Accordingly, after the input operation for the object is detected, the object is placed in the display state or the contours of the object are displayed and after a lapse of the predetermined time, the sensitive area to the input operation is switched to the second sensitive area within the first sensitive area, whereby the input operation corresponding to the object to be operated can be appropriately accepted and processed and the user can easily grasp the operation position and perform registration.

The invention contains the input device of the electronic device described above, wherein the input signal analysis section sets a larger area than the display area of the object as the first sensitive area.
Accordingly, a larger area than the display area of the object is set as the first sensitive area, whereby if the object to be operated cannot clearly be recognized, even if the user operates a slight shift position from the display range of the object, the input operation is accepted and the corresponding processing can be performed.

The invention contains the input device of the electronic device described above, wherein the input signal analysis section sets an area of roughly the same size as the display area of the object and smaller than the first sensitive area as the second sensitive area.
Accordingly, an area of roughly the same size as the display area of the object and smaller than the first sensitive area is set as the second sensitive area, whereby if the object to be operated can be recognized, only the input operation matched with the display area of the object can be appropriately accepted and processed and erroneous detection at the input operation time, etc., can be prevented.

The invention contains the input device of the electronic device described above, wherein the input signal analysis section sets an area larger than the display area of the object as the first sensitive area if at least one of the case where the contour portion of the object is a complicated shape, the case where display of the object contains gradation, the case where the display luminance of the object is low, and the case where the contrast between the object and a background is low is contained as a mode in which the clearness of the contours of the object is low.
Accordingly, an area larger than the display area of the object is set as the first sensitive area in the mode in which the clearness of the contours of the object is low, so that if the input position is a slight shift position, the input operation can be detected and processing corresponding to the operation target can be performed.

The invention contains the input device of the electronic device described above, wherein even if the input position is placed out of the first sensitive area, if the input signal analysis section detects that the input position moves to the inside of the first sensitive area within a predetermined time, it determines that the operation is input operation for the object.
Accordingly, even if the input position is placed out of the first sensitive area, if the input position moves to the inside of the first sensitive area within the predetermined time, it is assumed that that the operation is input operation for the object, so that operation position correction of the user can be followed appropriately and operability can be improved.

An input operation processing method of the invention is an input operation processing method in an input device of an electronic device, including a display section that can display visible information concerning input operation; a touch panel having an input function according to contact operation with an input face corresponding to a display screen of the display section; and an input control section for giving a processing command for input operation based on an input signal of the touch panel, wherein the input control section has an input position detection step of detecting an input position on the input face; a screen display control step of controlling the display state of an object to be operated, displayed on the display screen; and an input signal analysis step, if the object to be operated is in a non-display state or is in a display state in a mode in which the clearness of the contours of the object is low, the input signal analysis step of determining whether or not the detected input position is in a first sensitive area containing a display area of the object as a sensitive area to input operation, and wherein if the input signal analysis step determines that the input position is in the first sensitive area, processing for the input operation is executed and the screen display control step places the objects in a display state or displays the contours of the object.

The invention provides an input control program for causing a computer to execute the steps of the input operation processing method described above.

The invention provides an electronic device installing an input device described above.

### <Advantages of the Invention>

According to the invention, there can be provided an input device, an input operation processing method, and an input control program of an electronic device that can appropriately set the display area of an element of an operation button, an icon, etc., to be operated and a sensitive area to operation in various situations and if the operation target cannot clearly be recognized, can improve operability.

### <Brief Description of the Drawings>

FIG. 1 is a block diagram to show the configuration of the main part of an input device of an electronic device in an embodiment of the invention.
FIG. 2 is a schematic drawing to show a specific example of a display screen and operation in the input device of the first embodiment of the invention.
FIG. 3 is a sequence chart to show the main operation in the input device of the first embodiment.
FIG. 4 is a schematic drawing to show a specific example of a display screen in the input device of the first embodiment.
FIG. 5 is a schematic drawing to show a specific example of a command assignment table used in the input device of the first embodiment.
FIG. 6 is a flowchart to show processing of sensitive area switch operation in the first embodiment.
FIG. 7 is a flowchart to show processing of input processing operation in the first embodiment.
FIG. 8 is a time chart to show an operation example at the sensitive area changing time in the first embodiment.
FIG. 9 is a schematic drawing to show a specific example of a display screen and sensitive areas in an input device of a second embodiment.
FIG. 10 is a flowchart to show processing of the sensitive area switching operation in the second embodiment.

### <Description of Reference Numerals>

- 1: Input device
- 10: Touch panel
- 30: Display section
- 31: Display screen
- 32: Operation button
- 34: Move trace
- 35: Highlight display
- 50: Control target device
- 100: Application
- 200: Input signal analysis section
- 210: Command assignment table
- 300: Input signal control section
- 400: Setting control section
- 500: Screen display control section
- A1, A2: Sensitive area

### <Best Mode for Carrying out the Invention>

In each of the following embodiments, a configuration example of applying to a mobile electronic device such as a mobile telephone terminal is shown as an example of an input device of an electronic device.

### (First embodiment)

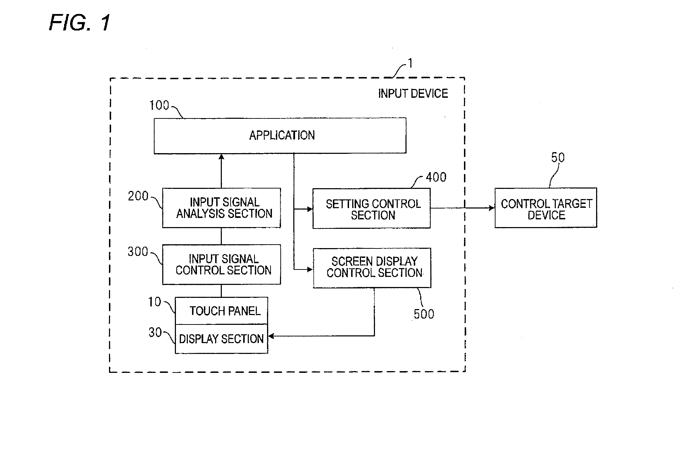

FIG. 1 is a block diagram to show the configuration of the main part of an input device of an electronic device in an embodiment of the invention.

The input device of the embodiment is a device assumed for the user to perform input operation for an electronic device such as a mobile telephone terminal, a portable information terminal (PDA), a portable music player, or a portable gaming machine, for example. The input device is installed in an electronic device and includes a touch panel having an input function by contact operation of touch, trace, etc., on an input face on a display section.

An input device 1 shown in FIG. 1 is made up of a touch panel 10, a display section 30, an application 100, an input signal analysis section 200, an input signal control section 300, a setting control section 400, and a screen display control section 500. An electronic device installing the input device 1 is provided with a control target device 50 of a sound output section, etc., of a loudspeaker, a headphone, etc.

The touch panel 10 is an input device for operation and contains a transparent pressure sensitive sheet formed like a flat face and outputs a signal representing the presence or absence of contact on a face of the pressure sensitive sheet and coordinate information of the contact detection position at regular time intervals. Therefore, the user presses (touches) the surface of the pressure sensitive sheet with his or her finger or using a stylus pen, etc., whereby a signal indicating the contact and coordinate information of the input position are output. The touch panel 10 may be formed using any other detection element than the pressure sensitive sheet, such as an electrostatic touch panel if it can detect the presence or absence of contact and the coordinates of the contact input position.

The display section 30 is a device that can display various pieces of visible information such as text, a pattern, and an image on a flat display screen and is implemented as a liquid crystal display, etc. The touch panel 10 is put on the display screen of the display section 30, forming an input face. Therefore, the user can touch a specific position (a position where an operation button, etc., is displayed) on the touch panel 10 while checking the content of the display screen of the display section 30 according to light passing through the touch panel 10. Display of each operation button may be temporarily erased from the display screen of the display section 30 as a non-display state, but input operation can also be performed for the operation button in the non-display state.

The application 100 is a program (middleware) for providing an interface for transferring various pieces of data, control information, etc., between each high-order individual application program (for example, a program for providing a music playback function) and the input device 1 for providing an input operation function. The application 100 executes the corresponding command based on a control signal sent from the input signal analysis section 200 and gives a command to the setting control section 400 and the screen display control section 500. At this time, it also manages the display state/non-display state of each operation button on the display screen of the display section 30.

The input signal control section 300 controls acceptance of a signal output from the touch panel 10 of an input device. Specifically, whether or not a signal input from the touch panel 10 is noise is checked and if an appropriate signal which is not noise is detected, the input position on the input face is detected and information representing the present or absence of contact and the contact position coordinates is sent to the input signal analysis section 200 at given intervals.

The input signal analysis section 200 analyzes the information input from the input signal control section 300, thereby associating the input operation of the user with a previously assigned command, and outputs a control signal for executing the corresponding command. Specifically, the operation of an operation state corresponding to simple button pressing (contact on), an operation state representing release of pressing (contact off), a move trace when the contact position is moved while it is pressed (displacement of contact position), etc., and the coordinates of the operation positions (input coordinates) are detected. The size of the area responsive to input of the user about each operation button is switched in response to whether the corresponding operation button is the display state or the non-display state. The further detailed operation is described later. The analysis result of the input signal analysis section 200 is input via the application 100 to the setting control section 400 or the screen display control section 500.

The setting control section 400 manages various parameters used when the electronic device operates, and controls the target section. For example, the setting control section 400 manages a sound volume adjustment parameter for adjusting the sound volume when music is played back, a sound quality adjustment parameter for adjusting the sound quality, etc. The parameters are given to the control target device (for example, an amplifier) 50.

The screen display control section 500 controls display of an object to be operated on the display screen of the display section 30 and performs display control of displaying the operation button as an example of the object to be operated as visible information (display of an image resembling a physical operation button) or erasing the display. The screen display control section 500 also manages a luminance adjustment parameter for adjusting the luminance on the display screen of the display section 30, etc., and controls the display section 30. In the description of the embodiment, the operation button is illustrated as the object to be operated; however, the objects to be operated include the objects to be operated displayed as visible information, such as a button, a knob, a switch, a wheel, a slide bar, and an icon.

In the configuration described above, the input signal analysis section 200, the input signal control section 300, the setting control section 400, and the screen display control section 500 implement the function of an input control section, and the input signal control section 300 implements the function of an input position detection section.

To make sound volume adjustment (volume adjustment), from the setting control section 400, the value of the sound voltage adjustment parameter is input to the sound signal output amplifier of the control target device 50 as a control signal for adjusting the gain. For example, if the user performs input operation for sound volume adjustment for the touch panel 10, the input signal analysis section 200 recognizes the input operation and the recognition result is input through the application 100 to the setting control section 400, and the sound volume adjustment parameter in the setting control section 400 is changed. Accordingly the gain of the amplifier to be controlled changes and the output sound volume from the sound output section changes.

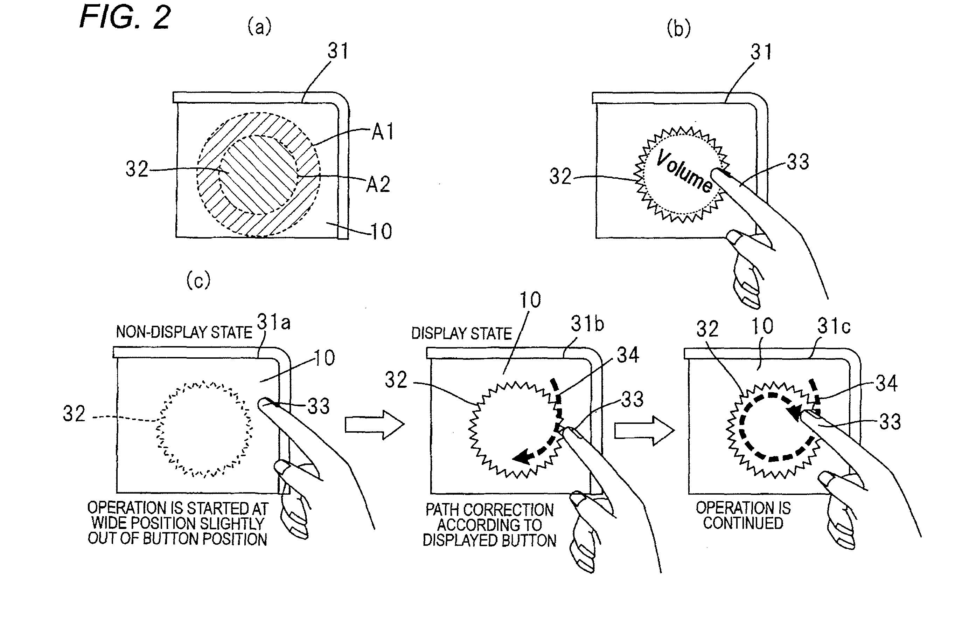

FIG. 2 is a schematic drawing to show a specific example of the display screen and the operation in the input device of the first embodiment. The specific example of the operation of the input device according to the first embodiment will be discussed with reference to FIG. 2. The display section 30 displays an operation button 32 of visible information having a circular shape imitating an operation knob of a volume, etc., on a display screen 31 as shown in FIG. 2. The user can operate the touch panel 10 while seeing the display of the screen, namely, visible information of the operation button 32 on the touch panel according to light passing through the touch panel 10 put on the screen.

In a general device, control is performed so that the range of the operation button 32 displayed on the display screen 31 and the range of the area of the touch panel 10 sensitive to operation input with a finger 33 from the user match as shown in FIG. 2 (b). For example, in a situation in which the user scarcely performs input operation, control is performed so as to temporarily erase display of the unnecessary operation button 32. The user can perform input operation for the operation button 32 even in a state in which the operation button 32 is erased from the display screen 31. That is, if the user familiar with the electronic device, the user remembers the rough position at which the operation button 32 exists and thus the user can touch and operate the possible position where the invisible operation button 32 in the non-display state may exist relying on his or her memory and intuition. If the operation position matches the position of the operation button 32, the input device accepts the input operation.

However, to operate the invisible operation button 32 in the non-display state, the user operates the button relying on his or her memory and intuition and thus the possibility that a position shift or difference may occur is high. Consequently, to realize desired operation, the user repeats the same input operation more than once while moving a finger little by little, and operability may be poor.

Then, in the input device of the embodiment, the area sensitive to the corresponding operation button 32 is automatically switched in response to whether the operation button 32 is in the display state or the non-display state. For example, as shown in FIG. 2 (a), when the operation button 32 is in the display state, a sensitive area A2 (second sensitive area) matching the display area of the operation button 32 (the inside of the contours of the button) is assigned as an area sensitive to input operation. When the operation button 32 is in the non-display state, a sensitive area A1 (first sensitive area) larger than the display area A2 of the operation button 32 is assigned as an area sensitive to input operation.

If input operation is performed in the non-display state of the operation button 32, when the operation button 32 is switched from the non-display state to the display state, switching from the sensitive area A1 sensitive to the input operation to A2 is delayed by a predetermined time or even if input outside the sensitive area is detected, if a move is made to the area within a predetermined time, the operation is accepted as one input operation sequence.

FIG. 2 (c) represents a specific example of input operation of the user and a state transition of a display screen. On a display screen 31 a on the left of the figure, the operation button 32 is in the non-display state and the sensitive area A1 larger than the contours of the operation button is sensitive to input operation. In this state, when the user starts operation at a wide position slightly out of the button position with a finger 33, the operation button 32 changes to the display state like a display screen 31 b at the center of the figure with the input operation of the user. When the operation button 32 changes to the display state, the user can precisely grasp the position of the operation button to be operated and can correct the path of the operation position and can cause a move trace 34 to converge within the display area of the operation button 32. In this state, the area sensitive to the input operation is switched from the sensitive area A1 larger than the operation button to the sensitive area A2 inside the contours of the operation button. The user continues circular rotation operation for the operation button 32 like a display screen 31 c on the right of the figure, whereby the user can perform input operation of continuous state change of sound volume adjustment, etc.

In the description of the embodiment, it is assumed that continuous input operation such as continuous operation of circle motion of rotation operation for the operation button and the state of sound volume, sound quality, luminance, playback position, etc., is continuously changed for continuous operation as a command corresponding to the input operation.

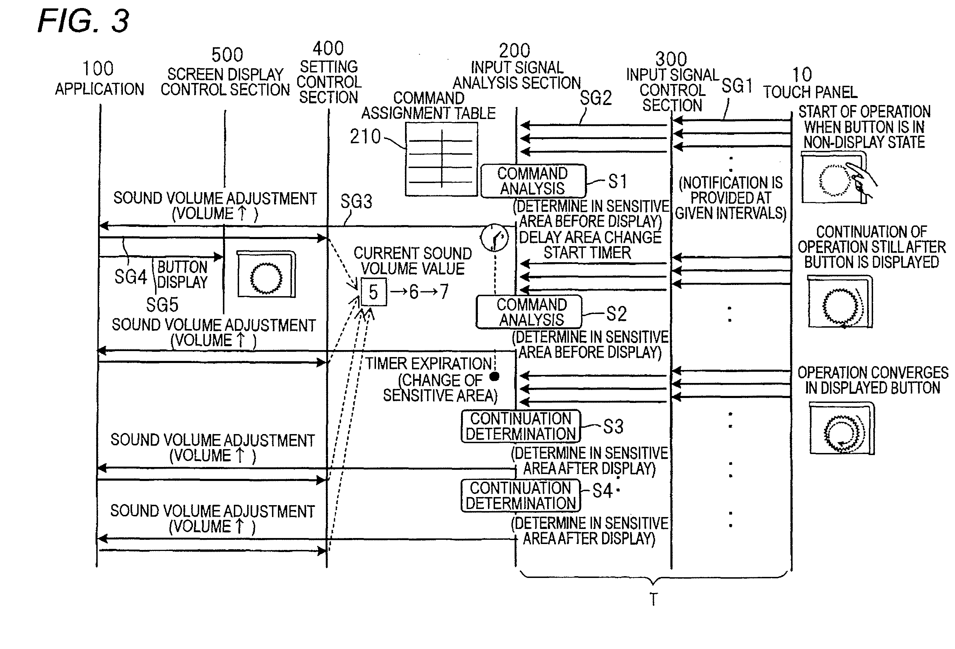

Next, a specific processing procedure of the input device according to the first embodiment will be discussed with reference to FIG. 3. FIG. 3 is a sequence chart to show the main operation in the input device of the first embodiment.

When the user touches the touch panel 10 to perform input operation, if the user comes in contact with the touch panel 10, an operation detection signal SG1 containing coordinate information representing the input position on the touch panel 10, etc., is output to the input signal control section 300 in a given period. The input signal control section 300 removes noise from the operation detection signal SG1 output by the touch panel 10 and gives only effective information to the input signal analysis section 200 as an operation signal SG2. In T between components shown on the right of FIG. 3, input coordinate information from the touch panel 10 is continuously sent through the input signal control section 300 to the input signal analysis section 200.

The input signal analysis section 200 analyzes a command associated with the current input operation at step S1. That is, the input position and the move trace, etc., based on the input operation signal SG2 and determines the corresponding command using a command assignment table 210 previously set and held.

At this time, the input signal analysis section 200 first acquires the input coordinates indicating the input position when operation is started, references the command assignment table 210, and determines whether or not the operation button corresponding to the coordinate position is stipulated. If the operation button is in the non-display state, input operation is accepted in the sensitive area (A1 in FIG. 2) in the wider range than the range of the display area of the operation button. If the corresponding operation button exists, the input signal analysis section 200 selects the command assigned to the operation button and gives command information to the application 100 for executing the corresponding command. The command is executed at given time intervals for input by operation of continuously changing the input coordinates; the command is executed when a finger of the user leaves the touch panel 10, etc., for input by single operation.

At this time, a command signal SG3 corresponding to the input operation is given from the input signal analysis section 200 to the application 100, a display control signal SG5 is given from the application 100 to the screen display control section 500, control of display switch of the operation button is performed, a setting control signal SG4 is given from the application 100 to the setting control section 400, and the value of the parameter corresponding to the command is changed.

The input signal analysis section 200 starts a timer for measuring the switching time of the sensitive area and analyzes the command associated with the input operation according to the large sensitive area A1 as before operation button display until the timer expires. That is, with detection of the operation start of the user, the screen display control section 500 is commanded to switch the operation button in the non-display state to the display state. For the switch timing of the operation button display, the time is delayed about switch of the sensitive area for accepting the input operation (switch from A1 to A2).

In the example in FIG. 3, in command analysis at step S2 following step S1, if the timer does not expire, the input signal analysis section 200 accepts input operation according to the large sensitive area A1 of the same sensitive area as before the operation button is displayed. Then, when the passage of a predetermined time is detected by the timer, the input signal analysis section 200 switches the area for accepting the input operation to the small sensitive area A2. When determining whether or not the same sensitive area continues at steps S3 and S4, the input signal analysis section 200 accepts input operation only in the range of the sensitive area A2 equivalent to the button display area (contours) of the same sensitive area as after the operation button is displayed. At steps S3 and S4, if the input operation continues, command information of the same command is output and the corresponding command is again executed and if interrupt of the input operation is detected, new input operation is determined.

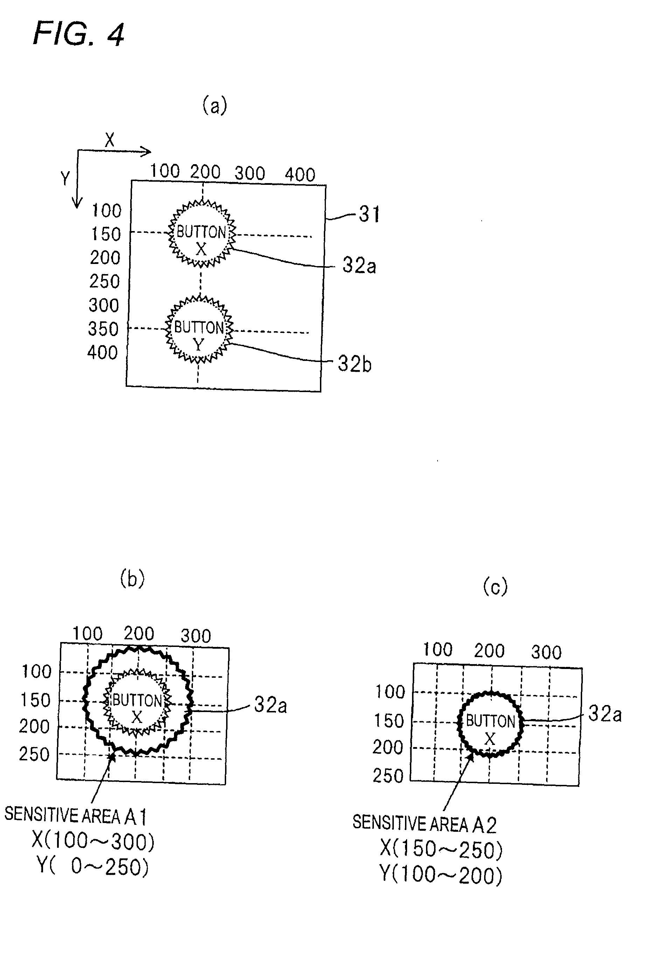

FIG. 4 is a schematic drawing to show a specific example of a display screen in the input device of the first embodiment. In FIG. 4, (a) shows operations buttons displayed on the display screen 31 of the display section 30, (b) shows the sensitive area A1 larger than the operation button, and (c) shows the sensitive area A2 of the same size as the operation button. Circular operation buttons 32a and 32b each imitating an operation knob of a volume are placed on the display screen 31 of the display section 30. The input signal analysis section 200 references the command assignment table 210 at each step of steps S1, S2, S3, and S4 in FIG. 3 and determines a command corresponding to touch panel operation according to the sensitive area A1 (in the non-display state) in FIG. 4 (b) or the sensitive area A2 (in the display state) in FIG. 4 (c) in response to the display state of the operation button.

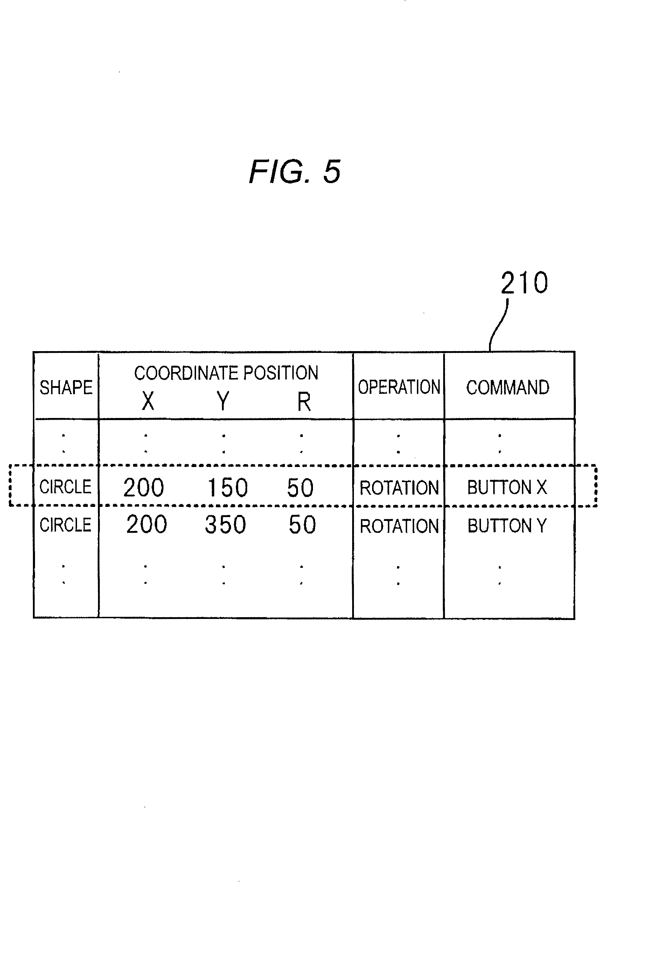

FIG. 5 is a schematic drawing to show a specific example of the command assignment table used in the input device of the first embodiment. FIG. 5 shows the contents of the command assignment table 210 corresponding to each operation button in FIG. 4. The command assignment table 210 registers information representing the shape of each operation button, the display range of the operation button according to the coordinate position (X, Y) and the size (radius R) of the operation button, the description of operation corresponding to the operation button (tapping, rotation, etc.,), and the type of command to be executed (button X, button Y, etc.,) for each operation button as information associated with the input operation. Therefore, at step S1, etc., in FIG. 3, the contents of the command assignment table 210 are referenced and are compared with the input coordinates of the input operation signal SG2 and the move trace, whereby the command to be executed can be determined.

In the embodiment, as other control parameters in the input signal analysis section 200, the sensitive area enlargement width before display of an operation button (for example, 50 dots), the sensitive area enlargement width after display (for example, 0 dots), and the change timing delay time of the sensitive area (for example, 500 msec) are set. In the example, before an operation button is displayed, if the operation position is 50 dots away from the button contours, a sensitive state is set and after the operation button is displayed, the state is switched to a sensitive state in the range of the button contours as the button size. At this time, the sensitive area is changed (narrowed) in 500 msec after the operation button is displayed, and a small allowance is given so that the user can make a trace correction of the operation position.

For example, when the operation button is in the non-display state, if input operation is detected in the sensitive area A1 at the coordinate position with X = 100 to 300, Y = 0 to 250, it is determined that the corresponding operation button 32a (button X) is operated, and it is determined the command assigned to the operation button is to be executed. On the other hand, when the operation button is in the display state, if input operation is detected in the sensitive area A2 at the coordinate position with X = 150 to 250, Y = 100 to 200, it is determined that the corresponding operation button 32a (button X) is operated, and it is determined the command assigned to the operation button is to be executed.

As a result of analyzing the input operation at step S1 in FIG. 3, if it is recognized that the command associated with the input operation is a command of "sound volume adjustment (sound volume increase)," the input signal analysis section 200 gives a command signal SG3 of sound volume increase to the application 100 as a sound volume adjustment command. In this case, the application 100 gives a setting control signal SG4 of sound volume increase to the setting control section 400 in accordance with the command signal SG3 and changes the value of the volume sound adjustment parameter. Accordingly, the volume sound adjustment parameter in the setting control section 400 is incremented by one step from the current sound volume value.

If the input operation of the user continues (the user continues to touch the touch panel 10), the input signal analysis section 200 executes command analysis and continuation determination at steps S2, S3, and S4 in accordance with the input operation signal SG2, and gives the determination result to the application 100. If input operation corresponding to sound volume adjustment (sound volume increase) is continued, a command signal SG3 of sound volume increase is input from the input signal analysis section 200 to the application 100 every predetermined time or every predetermined displacement amount. Accordingly, a setting control signal SG4 of sound volume increase is input in sequence from the application to the setting control section 400, the value of the sound volume adjustment parameter is updated, and the sound volume is increased one step at a time (in the example in FIG. 3, 5 -> 6 -> 7).

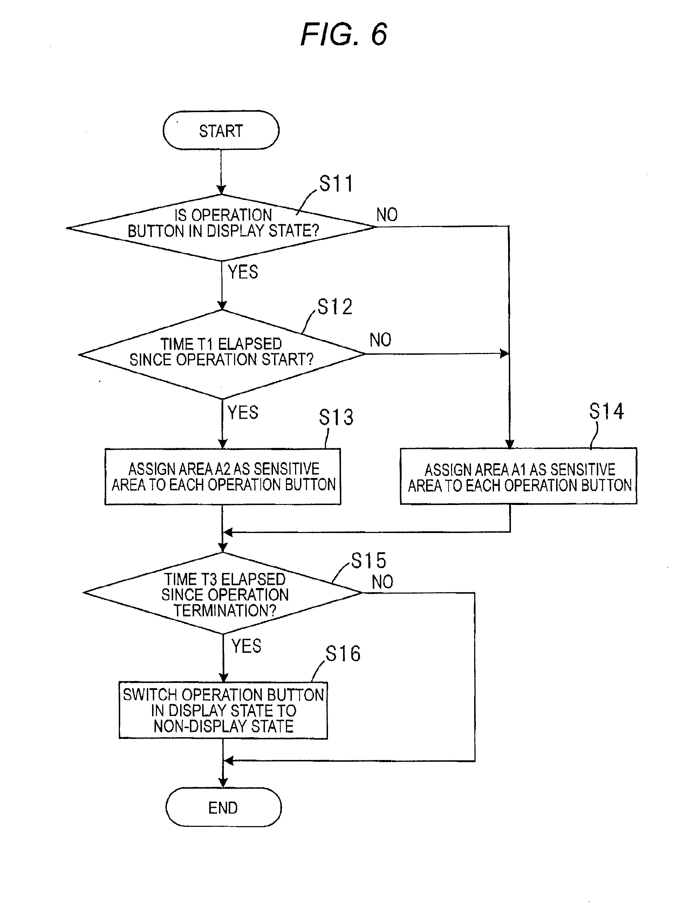

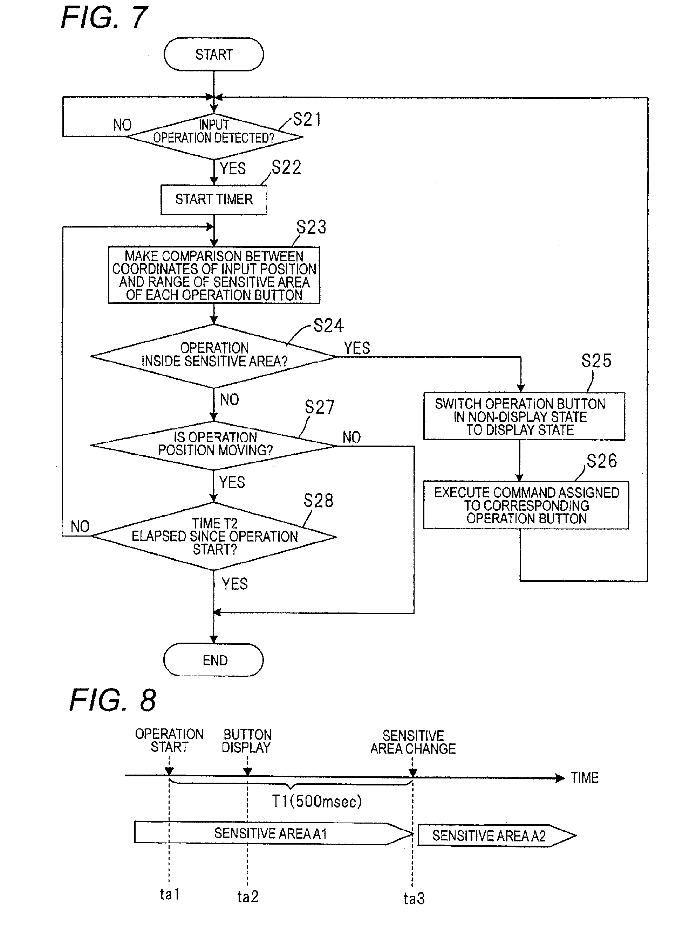

The more detailed operation of the embodiment will be discussed with reference to FIGs. 6 and 7. FIG. 6 is a flowchart to show processing of sensitive area switch operation in the first embodiment and FIG. 7 is a flowchart to show processing of input processing operation in the first embodiment. The processing shown in FIG. 6 is repeated on a regular basis in a short period mainly in the input signal analysis section 200. The processing shown in FIG. 7 is executed accompanying detection of input operation for the touch panel 10 mainly in the input signal analysis section 200; processing is performed at steps S1 and S2 of command analysis in FIG. 3 and at steps S3, S4, etc., of continuation determination.

At step S11 in FIG. 6, the input signal analysis section 200 checks the state of the operation button 32 that can be displayed on the display screen 31 of the display section 30 through the screen display control section 500 and determines whether the state is the display state or the non-display state. If the state is the display state, the process goes to step S12 and if the state is the non-display state, the process goes to step S14.

At step S12, the input signal analysis section 200 checks whether or not the elapsed time since the operation button was switched from the non-display state to the display state arrives at a predetermined time T1 (for example, 500 milliseconds). When the time T1 has elapsed, the input signal analysis section 200 goes to step S13; when the time T1 has not yet elapsed, the input signal analysis section 200 goes to step S14.

At step S13, when the operation button 32 is in the display state, the input signal analysis section 200 assigns the sensitive area A2 (see FIG. 2 (a)) equivalent to the inside of the contours of the display range of the operation button 32 as the sensitive area of each operation button 32 (area sensitive to the input operation).

At step S14, when the operation button 32 is in the non-display state, the input signal analysis section 200 assigns the sensitive area A1 (see FIG. 2 (a)) larger a predetermined amount than the display range of the operation button 32 as the sensitive area of each operation button 32.

At step S15, the input signal analysis section 200 checks whether or not a predetermined time T3 has elapsed since the last input operation was detected. When new input operation is not detected if the time T3 has elapsed, step S16 is executed.

At step S16, the screen display control section 500 erases the operation button 32 in the display state from the display screen 31 and switches the display state to the non-display state. This means that if a state in which the user does not perform input operation continues over the time T3, the operation button 32 automatically switches to the non-display state.

On the other hand, at step S21 in FIG. 7, the input signal analysis section 200 determines whether or not input operation is detected and if input operation is detected, the input signal analysis section 200 goes to step S22. That is, the input signal analysis section 200 determines whether or not input operation is detected based on the operation signal SG2 output by the input signal control section 300 according to the operation detection signal SG1 output from the touch panel 10.

At step S22, the input signal analysis section 200 starts a timer used to determine the elapsed time since the operation start. The time corresponds to the timer, etc., shown in FIG. 3 and counts the time T1 in FIG. 6, time T2 in FIG. 7, etc.

At step 23, the input signal analysis section 200 makes a comparison between the coordinates of the input position detected by the touch panel 10 and the range of the sensitive area concerning each operation button 32 registered in the command assignment table 210. The sensitive area is assigned in sequence at step S13 or step S14 in FIG. 6 as described above.

As the comparison result at step S23, if the input signal analysis section 200 detects operation at a position inside the sensitive area, the input signal analysis section 200 goes to step S25 from step S24; if the input signal analysis section 200 detects operation at a position outside the sensitive area, the input signal analysis section 200 goes to step S27 from step S24.

At step S25, the screen display control section 500 switches the operation button 32 in the non-display state to the display state if operation corresponding to the operation button 32 is detected based on a command from the input signal analysis section 200. Therefore, if the operation button 32 is erased from the screen so far, the operation button 32 is again displayed on the screen with execution of step S25 as button operation is detected.

At step S26, the input signal analysis section 200 references the contents of the command assignment table 210, identifies a specific command associated with the operation button 32 matching the operation position, and executes the command.

At step S27, the input signal analysis section 200 monitors information of the operation position and determines whether or not the operation position is moving. If the operation position is moving, step S28 is executed.

At step S28, whether or not a predetermined time T2 (for example, one second) has elapsed since the operation was started is determined. If the time T2 does not elapse, the process returns to step S23 and if a position placed out of the sensitive area of the operation button 32 is operated although the time T2 has elapsed, it is assumed that the operation position is not corrected and normal operation is not continued, and the processing is terminated.

According to the processing, when the operation button 32 is actually displayed on the display screen 31, the area A2 is assigned as the sensitive area of the operation button 32 at step S13 in FIG. 6 and thus the user operates the inside of the range of the operation button 32 that can be actually visibly recognized, whereby the command assigned to the operation button can be executed.

When the operation button 32 is in the non-display state, the area A1 is assigned as the sensitive area of the operation button 32 at step S14 in FIG. 6 and thus input operation is accepted in a wider range than the display range of the operation button 32 remembered by the user. In this case, if the operation position of the user is a slight position shift from the range of the operation button 32 in the non-display state, the command for the corresponding operation button can be executed.

Further, if the operation button 32 is switched from the non-display state to the display state, step S14 in FIG. 6 is executed until the predetermined time T1 has elapsed since the point in time and thus rapid change of the range of the sensitive area where input operation is accepted can be prevented. That is, the sensitive area is not changed until the user recognizes the actually displayed operation button 32 and knows a change in the situation, so that giving an uncomfortable feeling to the user can be prevented.

FIG. 8 is a time chart to show an operation example at the sensitive area changing time in the first embodiment. In the operation example shown in FIG. 8, when input operation of the user is detected at time ta1, the hidden operation button in the non-display state is displayed in response to the operation. Here, considering the effect of processing delay, operation delay of display device, etc., the operation button is actually displayed at time ta2 with a delay of about several tens of milliseconds from the time ta1. The comparatively large sensitive area A1 is assigned as the sensitive area of the operation button for a while if the user starts operation. When the time T1 (for example, 500 msec) has elapsed at time ta3, the sensitive area of the operation button is changed to the area A2.

Even if the user first operates the outside of the sensitive area of the operation button, if the user moves the position of a finger so as to operate the inside of the sensitive area within the predetermined time T2, the input signal analysis section 200 detects the move of the input position, determines that the operation is input operation for the corresponding operation button, and accepts the operation from the beginning as one operation sequence. That is, if the operation position moves on the outside of the sensitive area, the process proceeds from step S24 in FIG. 7 to S27, S28, S21 and move of the operation position is monitored until the time T2 has elapsed. Thus, when move to the inside of the sensitive area within the time T2 is detected, the input operation is accepted as one operation sequence (move trace, etc.,) containing operation at a position placed out of the sensitive area at step S26.

According to the configuration of the first embodiment described above, if the operation button to be operated by the user is switched to the display state and the non-display state in response to the situation, appropriate control can be performed so that the operability of the user is ensured in each situation.

In the input device of the embodiment, when the operation button is in the non-display state, a large range as compared with that in the display state is assigned as the sensitive area, so that if the user operates a slight shift position from the essential display range of an operation button or an icon, the input operation can be accepted and the corresponding processing can be performed. In this case, the input position shifts from the operation button, the input operation can be detected and processing corresponding to the operation target can be executed. As in the embodiment, the display area of the operation button and the sensitive area can be set appropriately, whereby if the operation button cannot clearly be recognized, appropriate processing for the operation position can be executed, non-reaction and erroneous detection for the input operation can be suppressed, and operability can be drastically improved.

In the display state of the operation button, the sensitive area is switched so as to assign the sensitive area equal to the button size, whereby the input operation corresponding to the operation button can be appropriately accepted and processed and the user can easily grasp the operation position and perform registration. In this case, erroneous detection at the input operation time, etc., can be prevented. Further, if operation input is detected, the operation button is placed in the display state or the contours of the operation button are displayed as highlight display, etc., so that the user can check reaction to the operation and can clearly recognize the operation target.

When the user performs continuous operation of rotation operation, etc., even if the initial or midway operation position is temporarily placed out of the sensitive area, if the user corrects the operation position and moves the operation position to the inside of the sensitive area within a predetermined time, the input operation is assumed to be the input operation for the corresponding operation button and is detected as one operation sequence, whereby correction of the operation position of the user can be handled appropriately and operability can be improved.

### (Second embodiment)

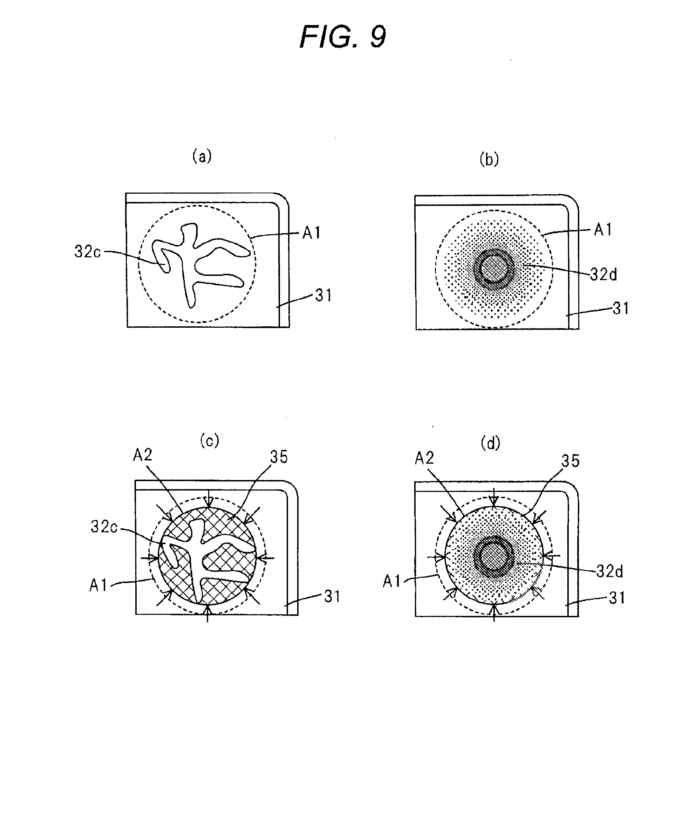

FIG. 9 is a schematic drawing to show a specific example of a display screen and sensitive areas in an input device of a second embodiment.

The second embodiment is a modified example of the first embodiment. In the second embodiment, an input device of a similar configuration to that in FIG. 1 is assumed, but the operation is a little changed. The changed operation is as follows:

An operation button 32 actually displayed on a display screen 31 may have low clearness of the contours of the operation button 32 and it may be difficult for the user to precisely grasp the range. In an example shown in FIG. 9 (a), the contour portion of an operation button 32c is a complicated shape and it is difficult for the user to discriminate the boundary between the inside and the outside of the display range of the operation button. Then, in the second embodiment, when the contour portion is vague and cannot clearly be discriminated as the contours of an operation button are not linear, etc., a circular sensitive area A1 larger than the contours of the operation button 32c is assigned as an area sensitive to input operation.

In an example shown in FIG. 9 (b), display of an operation button 32d contains gradation and thus it is difficult to discriminate the position of the contours. Therefore, for the operation button 32d containing display of gradation, a circular sensitive area A1 larger than the whole display range of the operation button is assigned as an area sensitive to input operation. As the mode in which clearness of the contours of the operation button 32 is low, the case where the display luminance of an operation button is low, the case where the contrast between an operation button and a background is low because the tint and the brightness of the operation button and the background are close, and the like are also contained in addition to the case where the contour portion of an object is a complicated shape and the case where display of an object contains gradation.

When display of the operation button 32 changes and a background image, etc., changes as highlight display is produced at the operation input time so that the user can grasp operation for the operation button 32, accordingly the display range of the operation button 32 changes so as to become clear for the user. Therefore, when display of the operation button changes, the sensitive area is switched after a lapse of a predetermined time period accordingly.

In an example shown in FIG. 9 (c), highlight display 35 of the button is produced as response processing to operation of the operation button 32c, whereby if the contour portion of the operation button 32c is a complicated shape and cannot clearly discriminated, the contrast between the operation button and the background becomes high by the highlight display 35, so that the display range becomes clear. In this case, initially a circular sensitive area A1 larger than the contours of the operation button 32c is assigned and when the highlight display 35 is produced after the operation start, a sensitive area A2 (inside of the contours) of the same size as the display range of the operation button is assigned as an area sensitive to input operation.

In an example shown in FIG. 9 (d), if the operation button 32d contains gradation and it is difficult to discriminate the position of the contours, the display range becomes clear by the highlight display 35 after operation. Also in this case, initially a circular sensitive area A1 larger than the contours of the operation button 32d is assigned and when the highlight display 35 is produced after the operation start, a sensitive area A2 of the same size as the operation button is assigned as an area sensitive to input operation.

Also in the example shown in FIG. 4, the two operation buttons 32a and 32b are displayed on the display screen 31; since the contour portion of the operation button 32a, 32b is formed as jagged or a waveform, the waveform portion is large and it may be difficult for the user to discriminate the boundary between the inside and the outside of the display range of the operation button. If the contour portion cannot clearly be discriminated, the sensitive area A1 larger than the contours of the operation button may be assigned as an area sensitive to input operation as shown in FIG. 4 (b).

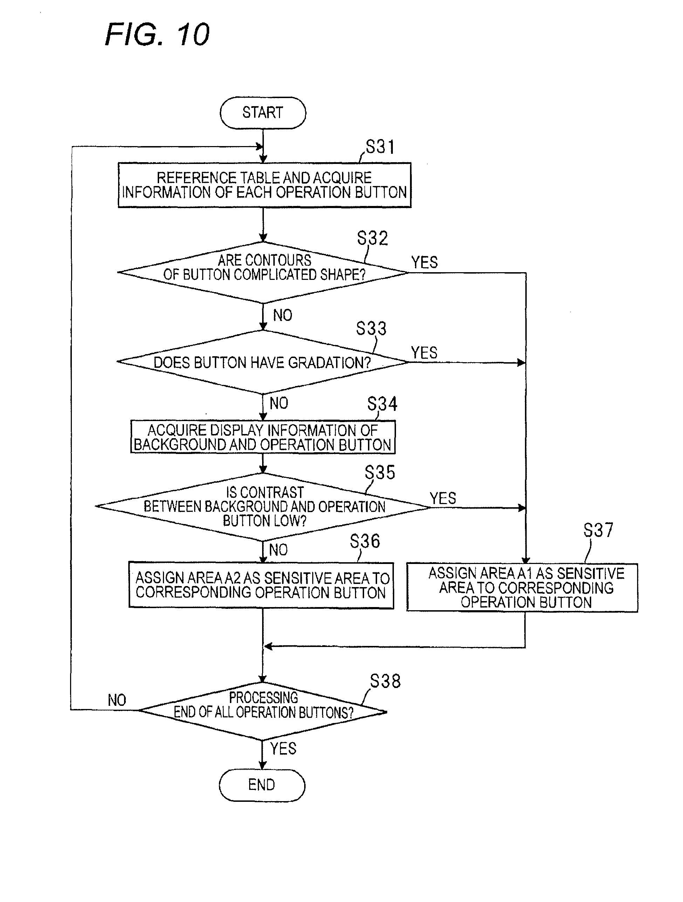

FIG. 10 is a flowchart to show processing of the sensitive area switching operation in the second embodiment. The processing shown in FIG. 10 is repeated on a regular basis in a short period mainly in an input signal analysis section 200 instead of the processing in FIG. 6 in the first embodiment.

At step S31 in FIG. 10, the input signal analysis section 200 selects each of operation buttons 32 registered in a command assignment table 210 in order for determination and acquires necessary information for each operation button from the command assignment table 210.

At step S32, the input signal analysis section 200 determines whether or not the contours of display of the corresponding operation button 32 are a complicated shape. If the shape is complicated (for example, a shape as shown in FIG. 9 (a)), the input signal analysis section 200 goes to step S37; if the shape is linear or is a simple curve, the input signal analysis section 200 goes to step S33.

At step S33, the input signal analysis section 200 determines whether or not display of the corresponding operation button 32 has gradation. If the display has gradation (for example, display as shown in FIG. 9 (b)), the input signal analysis section 200 goes to step S37; otherwise, it goes to step S34.

At step S34, the input signal analysis section 200 acquires necessary display information for each operation button to determine the contract between display of the corresponding operation button 32 and the background.

At step S35, the input signal analysis section 200 determines whether the contract between display of the corresponding operation button 32 and the background is high or low. If the contrast is comparatively low (for example, in FIG. 9 (c), (d), before highlight display 35 is produced), the input signal analysis section 200 goes to step S37; if the contrast is high (for example, in FIG. 9 (c), (d), after highlight display 35 is produced), the input signal analysis section 200 goes to step S36. Change may be made or processing may be added so as to determine color difference in addition to the contrast.

At step S36, if the contours of the operation button 32 can be clearly discriminated, the input signal analysis section 200 assigns sensitive area A2 (see FIG. 2 (a)) equivalent to the inside of the contours of the display range of the operation button 32 as the sensitive area (area sensitive to input operation) of the corresponding operation button 32.

At step S37, if the contours of the operation button 32 are hard to discriminate, the input signal analysis section 200 assigns sensitive area A1 (see FIG. 2 (a)) larger by a predetermined amount than the display range of the operation button 32 as the sensitive area of the corresponding operation button 32.

At step S38, whether or not processing of all operation buttons terminates is determined and processing at steps S31 to S37 is repeated for all operation buttons 32 displayed on the current display screen 31. The above-described processing may be performed for all operation buttons 32 registered in the command assignment table 210. If termination of processing for all operation buttons 32 is detected at step S38, the processing is terminated.

In the second embodiment, in each operation button actually displayed on the display screen, in a state in which the user is hard to clearly grasp the operation button in a mode in which clearness of the contours of the operation button is low when the shape of the contours is complicated, when display of the operation button contains gradation, when the contrast between the operation button and the background is low, etc., the sensitive area A1 larger than the contours of the operation button is assigned and it is made possible to detect input operation in a large range. Accordingly, if the operation position of the user slightly shifts, the input device can accept the operation and can execute processing corresponding to the operation target. When each operation button is operated, if highlight display is produced and the contours of the operation button, etc., are clear, the sensitive area A2 of the same size as the contours of the operation button is assigned, so that it is easy for the user to understand the range in which operation is actually accepted.

It is to be understood that the invention is not limited to the items shown in the embodiments described above and the invention is also intended for those skilled in the art to make modifications and application based on the Description of the invention and well-known arts and the modifications and the application are contained in the scope to seek protection.

In the embodiments described above, it is assumed that the touch panel 10 is used as the input section and the coordinates of the input position are detected in the input position detection section, but any other input device such as a mouse, a track ball, or a pen input device may be used for the input section in place of the touch panel 10 and the input position may be detected if it has an input function having input position information. For example, a mouse cursor is displayed on a screen and the display position of the mouse cursor is moved with operation of an input device of a mouse, etc., and the coordinates of the input position can also be recognized for operation of click of the display position of the mouse cursor, etc.

The input device of the embodiment can implemented as dedicated hardware only of an electronic circuit, etc., or can also be made up of a computer including a control processor and memory, etc., and a program executed in the computer in combination.

The input device of the embodiment is installed in an electronic device such as a mobile telephone terminal, a portable music player, or a portable gaming machine including a loudspeaker, a receiver, or an external AV output, whereby the advantages of the embodiment are provided in the electronic device. For example, operation of setting the output value of a sound such as the sound volume or the sound quality, selection of output content, or the like can be easily performed by contact operation of trace, touch, etc., if the object of a button, a switch, etc., is not displayed, so that it is made possible to easily perform operation intended by the user. If content includes an image, easy operation can be performed while each object is in the non-display state when the user does not perform any operation, so that the user can perform easy operation while enjoying the image and a useful electronic device can be implemented. The input device is useful not only for an output device of a loudspeaker, etc., but also for setting in an electronic device, for example, selection of a telephone directory or content, viewing operation of a Web page, etc.

This application is based on Japanese Patent Application (No. 2007-340242) filed on December 28, 2007, which is incorporated herein by reference.

### <Industrial Applicability>

The invention has the advantages that the display area of an element of an operation button, an icon, etc., to be operated and a sensitive area to operation can be set appropriately in various situations and if the operation target cannot clearly be recognized, it is made possible to improve operability, and is useful in an input device, an input operation processing method, an input control program, etc., of an electronic device that can be used for input operation in an electronic device such as a mobile telephone terminal, a portable information terminal (PDA), a portable music player, or a portable gaming machine, for example.

## Claims

1. An input device of an electronic device, comprising:
a display section that can display visible information concerning input operation;
an input operation section giving a command to a display screen of said display section and generating an input signal; and
an input control section giving a processing command based on an input signal of said input operation section,
wherein said input control section has:
an input position detection section detecting an input position corresponding to the display screen based on the input signal;
a screen display control section controlling the display state of an object to be operated, displayed on the display screen; and
an input signal analysis section, if the object to be operated is in a non-display state or is in a display state in a mode in which the clearness of the contours of the object is low by the screen display control section, the input signal analysis section for determining whether or not the input position detected by the input position detection section is in a first sensitive area containing a display area of the object as a sensitive area to input operation, and wherein if the input signal analysis section determines that the input position is in the first sensitive area, processing for the input operation is executed and the screen display control section places the objects in a display state or displays the contours of the object.

2. An input device of an electronic device, comprising:
a display section that can display visible information concerning input operation;
a touch panel having an input function according to contact operation with an input face corresponding to a display screen of said display section; and
an input control section giving a processing command for input operation based on an input signal of said touch panel, wherein
said input control section has:
an input position detection section detecting an input position on the input face;
a screen display control section controlling the display state of an object to be operated, displayed on the display screen; and
an input signal analysis section, if the object to be operated is in a non-display state or is in a display state in a mode in which the clearness of the contours of the object is low by the screen display control section, the input signal analysis section for determining whether or not the input position detected by the input position detection section is in a first sensitive area containing a display area of the object as a sensitive area to input operation, and wherein if the input signal analysis section determines that the input position is in the first sensitive area, processing for the input operation is executed and the screen display control section places the objects in a display state or displays the contours of the object.

3. The input device of the electronic device as claimed in claim 1 or 2 wherein the input signal analysis section switches the sensitive area to input operation to a second sensitive area within the first sensitive area after a lapse of a predetermined time since the screen display control section displayed the object or the contours of the object, and determines whether or not the input position is within the second sensitive area.

4. The input device of the electronic device as claimed in claim 1 or 2 wherein the input signal analysis section sets a larger area than the display area of the object as the first sensitive area.

5. The input device of the electronic device as claimed in claim 3 wherein the input signal analysis section sets an area of roughly the same size as the display area of the object and smaller than the first sensitive area as the second sensitive area.

6. The input device of the electronic device as claimed in claim 1 or 2 wherein the input signal analysis section sets an area larger than the display area of the object as the first sensitive area if at least one of the case where the contour portion of the object is a complicated shape, the case where display of the object contains gradation, the case where the display luminance of the object is low, and the case where the contrast between the object and a background is low is contained as a mode in which the clearness of the contours of the object is low.

7. The input device of the electronic device as claimed in claim 1 or 2 wherein even if the input position is placed out of the first sensitive area, if the input signal analysis section detects that the input position moves to the inside of the first sensitive area within a predetermined time, it determines that the operation is input operation for the object.

8. An input operation processing method in an input device of an electronic device, comprising a display section that can display visible information concerning input operation; a touch panel having an input function according to contact operation with an input face corresponding to a display screen of the display section; and an input control section for giving a processing command for input operation based on an input signal of the touch panel, wherein the input control section has:
an input position detection step of detecting an input position on the input face;
a screen display control step of controlling the display state of an object to be operated, displayed on the display screen; and
an input signal analysis step, if the object to be operated is in a non-display state or is in a display state in a mode in which the clearness of the contours of the object is low, the input signal analysis step of determining whether or not the detected input position is in a first sensitive area containing a display area of the object as a sensitive area to input operation, and wherein
if the input signal analysis step determines that the input position is in the first sensitive area, processing for the input operation is executed and the screen display control step places the objects in a display state or displays the contours of the object.

9. An input control program for causing a computer to execute the steps of the input operation processing method as claimed in claim 8.

10. An electronic device installing an input device as claimed in any of claims 1 to 7.

## Amended claims

### Amended claims under Art. 19.1 PCT

1. (Amended)
An input device of an electronic device, comprising:
a display section that can display visible information concerning input operation;
an input operation section giving a command to a display screen of said display section and generating an input signal; and
an input control section giving a processing command based on an input signal of said input operation section,
wherein said input control section has:
an input position detection section detecting an input position corresponding to the display screen based on the input signal;
a screen display control section controlling the display state of an object to be operated, displayed on the display screen; and
an input signal analysis section, if the object to be operated is in a non-display state by the screen display control section, the input signal analysis section for determining whether or not the input position detected by the input position detection section is in a first sensitive area containing a display area of the object as a sensitive area to input operation, and
wherein if the input signal analysis section determines that the input position is in the first sensitive area, processing for the input operation is executed and the screen display control section places the objects in a display state or displays the contours of the object.

2. (Amended)
An input device of an electronic device, comprising:
a display section that can display visible information concerning input operation;
an input operation section giving a command to a display screen of said display section and generating an input signal; and
an input control section giving a processing command based on an input signal of said input operation section,
wherein said input control section has:
an input position detection section detecting an input position corresponding to the display screen based on the input signal;
a screen display control section controlling the display state of an object to be operated, displayed on the display screen; and
an input signal analysis section, if the object to be operated is in a display state in a mode in which the clearness of the contours of the object is low by the screen display control section, the input signal analysis section for determining whether or not the input position detected by the input position detection section is in a first sensitive area containing a display area of the object as a sensitive area to input operation, and
wherein if the input signal analysis section determines that the input position is in the first sensitive area, processing for the input operation is executed and the screen display control section places the objects in a display state or displays the contours of the object.

3. (Amended)
An input device of an electronic device, comprising:
a display section that can display visible information concerning input operation;
a touch panel having an input function according to contact operation with an input face corresponding to a display screen of said display section; and
an input control section giving a processing command for input operation based on an input signal of said touch panel, wherein
said input control section has:
an input position detection section detecting an input position corresponding to the display screen based on the input signal;
a screen display control section controlling the display state of an object to be operated, displayed on the display screen; and
an input signal analysis section, if the object to be operated is a non-display state by the screen display control section by the screen display control section, the input signal analysis section for determining whether or not the input position detected by the input position detection section is in a first sensitive area containing a display area of the object as a sensitive area to input operation, and wherein if the input signal analysis section determines that the input position is in the first sensitive area, processing for the input operation is executed and the screen display control section places the objects in a display state or displays the contours of the object.

4. (Amended)
An input device of an electronic device, comprising:
a display section that can display visible information concerning input operation;
a touch panel having an input function according to contact operation with an input face corresponding to a display screen of said display section; and
an input control section giving a processing command for input operation based on an input signal of said touch panel, wherein
said input control section has:
an input position detection section detecting an input position corresponding to the display screen based on the input signal;
a screen display control section controlling the display state of an object to be operated, displayed on the display screen; and
an input signal analysis section, if the object to be operated is in a display state in a mode in which the clearness of the contours of the object is low by the screen display control section, the input signal analysis section for determining whether or not the input position detected by the input position detection section is in a first sensitive area containing a display area of the object as a sensitive area to input operation, and wherein if the input signal analysis section determines that the input position is in the first sensitive area, processing for the input operation is executed and the screen display control section places the objects in a display state or displays the contours of the object.

5. (Amended)
The input device of the electronic device as claimed in any one of claims 1 to 4, wherein the input signal analysis section switches the sensitive area to input operation to a second sensitive area within the first sensitive area after a lapse of a predetermined time since the screen display control section displayed the object or the contours of the object, and determines whether or not the input position is within the second sensitive area.

6. (Amended)
The input device of the electronic device as claimed in any one of claims 1 to 4, wherein the input signal analysis section sets a larger area than the display area of the object as the first sensitive area.

7. (Amended)
The input device of the electronic device as claimed in claim 5 wherein the input signal analysis section sets an area of roughly the same size as the display area of the object and smaller than the first sensitive area as the second sensitive area.

8. (Amended)
The input device of the electronic device as claimed in any one of claims 1 to 4, wherein the input signal analysis section sets an area larger than the display area of the object as the first sensitive area if at least one of the case where the contour portion of the object is a complicated shape, the case where display of the object contains gradation, the case where the display luminance of the object is low, and the case where the contrast between the object and a background is low is contained as a mode in which the clearness of the contours of the object is low.

9. (Amended)
The input device of the electronic device as claimed in any one of claims 1 to 4, wherein even if the input position is placed out of the first sensitive area, if the input signal analysis section detects that the input position moves to the inside of the first sensitive area within a predetermined time, it determines that the operation is input operation for the object.

10. (Amended)
An input operation processing method in an input device of an electronic device, comprising a display section that can display visible information concerning input operation; a touch panel having an input function according to contact operation with an input face corresponding to a display screen of the display section; and an input control section for giving a processing command for input operation based on an input signal of the touch panel, wherein the input control section has:
an input position detection step of detecting an input position on the input face;
a screen display control step of controlling the display state of an object to be operated, displayed on the display screen; and
an input signal analysis step, if the object to be operated is in a non-display state or is in a display state in a mode in which the clearness of the contours of the object is low, the input signal analysis step of determining whether or not the detected input position is in a first sensitive area containing a display area of the object as a sensitive area to input operation, and wherein
if the input signal analysis step determines that the input position is in the first sensitive area, processing for the input operation is executed and the screen display control step places the objects in a display state or displays the contours of the object.

11. (Newly added)
An input control program for causing a computer to execute the steps of the input operation processing method as claimed in claim 10.

12. (Newly added)
An electronic device installing an input device as claimed in any of claims 1 to 9.
